# EUROPÄISCHE PATENTSCHRIFT

(11) **EP 1 436 950 B1**
(45) Veröffentlichungstag und Bekanntmachung des Hinweises auf die Patenterteilung: **23.04.2008**
(21) Anmeldenummer: 02776779.7
(22) Anmeldetag: 04.10.2002
(51) Int. Cl.: H04L 12/413, H04L 12/64, H04L 12/54, G06F 13/38

(54) **TEILNEHMERGERÄT FÜR EIN HOCHPERFORMANTES KOMMUNIKATIONSSYSTEM**
USER DEVICE FOR A HIGH PERFORMANCE COMMUNICATION SYSTEM
DISPOSITIF ABONNE POUR SYSTEME DE COMMUNICATION HAUTES PERFORMANCES

(30) Priorität: 17.10.2001 DE 10150672; 26.07.2002 DE 10234148
(43) Veröffentlichungstag der Anmeldung: 14.07.2004
(73) Patentinhaber: SIEMENS AKTIENGESELLSCHAFT, 80333 München (DE)
(72) Erfinder: KLOTZ, Dieter, 90768 Fürth (DE); BRÜCKNER, Dieter, 96199 Zapfendorf (DE); KRAUSE, Karl-Heinz, 90475 Nürnberg (DE)
(86) Internationale Anmeldenummer: PCT/DE2002/003751
(87) Internationale Veröffentlichungsnummer: WO 2003/036879

(56) Entgegenhaltungen:
- DE-A- 10 058 524
- US-A- 6 167 471
- US-B1- 6 266 727

## Beschreibung

Die Erfindung betrifft ein Teilnehmergerät für ein Kommunikationssystem, insbesondere ein Ethernet und / oder Real-Time Ethernet Kommunikationssystem, zum Senden und Empfangen von Datentelegrammen sowie ein Kommunikationssystem und ein Kommunikationsverfahren.

Unter einem synchronen, getakteten Kommunikationssystem mit Äquidistanz-Eigenschaften versteht man ein System aus wenigstens zwei Teilnehmergeräten, die über ein Datennetz zum Zweck des gegenseitigen Austausches von Daten bzw. der gegenseitigen Übertragung von Daten miteinander verbunden sind. Dabei erfolgt der Datenaustausch zyklisch in äquidistanten Kommunikationszyklen, die durch den vom System verwendeten Kommunikationstakt vorgegeben werden.

Ein äquidistanter deterministischer zyklischer Datenaustausch in Kommunikationssystemen basiert auf einer gemeinsamen Takt- bzw. Zeitbasis aller an der Kommunikation beteiligten Komponenten. Die Takt- bzw. Zeitbasis wird von einer ausgezeichneten Komponente (Taktschläger) zu den anderen Komponenten Übertragen. Bei isochronem Real-Time-Ethernet wird der Takt bzw. die Zeitbasis von einem Synchronisationsmaster durch das Senden von Synchronisationstelegrammen vorgegeben.

Teilnehmergeräte sind beispielsweise zentrale Automatisierungsgeräte, Programmier-, Projektierungs- oder Bediengeräte, Peripheriegeräte wie z.B. Ein-/ Ausgabe-Baugruppen, Antriebe, Aktoren, Sensoren, speicherprogrammierbare Steuerungen (SPS) oder andere Kontrolleinheiten, Computer, oder Maschinen, die elektronische Daten mit anderen Maschinen austauschen, insbesondere Daten von anderen Maschinen verarbeiten. Teilnehmergeräte werden auch Netzwerkknoten oder Knoten genannt.

Unter Kontrolleinheiten werden im folgenden Regler- oder Steuerungseinheiten jeglicher Art verstanden, aber auch beispielsweise Switches und/oder Switch-Controller. Als Datennetze werden beispielsweise Bussysteme wie z.B. Feldbus, Profibus, Ethernet, Industrial Ethernet, FireWire oder auch PCinterne Bussysteme (PCI), etc., insbesondere aber auch isochrones Real-Time Ethernet verwendet.

Datennetze ermöglichen die Kommunikation zwischen mehreren Teilnehmergeräten durch die Vernetzung, also Verbindung der einzelnen Teilnehmergeräte untereinander. Kommunikation bedeutet dabei die Übertragung von Daten zwischen den Teilnehmergeräten. Die zu übertragenden Daten werden dabei als Datentelegramme verschickt, d.h. die Daten werden zu mehreren Paketen zusammengepackt und in dieser Form über das Datennetz an den entsprechenden Empfänger gesendet. Man spricht deshalb auch von Datenpaketen. Der Begriff Übertragung von Daten wird dabei hier synonym zur oben erwähnten Übertragung von Datentelegrammen oder Datenpaketen verwendet.

In verteilten Automatisierungssystemen, beispielsweise im Bereich Antriebstechnik, müssen bestimmte Daten zu bestimmten Zeiten bei den dafür bestimmten Teilnehmergeräten eintreffen und von den Empfängern verarbeitet werden. Man spricht dabei von echtzeitkritischen Daten bzw. Datenverkehr, da ein nicht rechtzeitiges Eintreffen der Daten am Bestimmungsort zu unerwünschten Resultaten beim Teilnehmergerät führt, im Gegensatz zur nicht echtzeitkritischen, beispielsweise inter- bzw. intranetbasierten Datenkommunikation. Gemäß IEC 61491, EN61491 SERCOS interface - Technische Kurzbeschreibung (http://www.sercos.de/deutsch/index_deutsch.htm) kann ein erfolgreicher echtzeitkritischer Datenverkehr der genannten Art in verteilten Automatisierungssystemen gewährleistet werden.

Automatisierungskomponenten (z.B. Steuerungen, Antriebe,...) verfügen heute im Allgemeinen über eine Schnittstelle zu einem zyklisch getakteten Kommunikationssystem. Eine Ablaufebene der Automatisierungskomponente (Fast-cycle) (z.B. Lageregelung in einer Steuerung, Drehmomentregelung eines Antriebs) ist auf den Kommunikationszyklus synchronisiert. Dadurch wird der Kommunikationstakt festgelegt. Andere, niederperformante Algorithmen (Slow-cycle) (z.B. Temperaturregelungen) der Automatisierungskomponente können ebenfalls nur über diesen Kommunikationstakt mit anderen Komponenten (z.B. Binärschalter für Lüfter, Pumpen,...) kommunizieren, obwohl ein langsamerer Zyklus ausreichend wäre. Durch Verwendung nur eines Kommunikationstaktes zur Übertragung von allen Informationen im System entstehen hohe Anforderungen an die Bandbreite der Übertragungsstrecke.

Für die Prozesssteuerung und -überwachung in der automatisierten Fertigung und insbesondere bei digitalen Antriebstechniken sind sehr schnelle und zuverlässige Kommunikationssysteme mit vorhersagbaren Reaktionszeiten erforderlich.

US 6,266,727 B1 beschreibt eine Datenleitung, die eine bidirektionale Datenleitung für Daten zwischen einer Anwendung und einer Bus-Struktur bereitstellt. Die Datenleitung kann einen Datenstrom senden, empfangen und Manipulationen daran durchführen. Die Datenleitung ist eine programmierbare Ablaufsteuerung, die den Datenstrom verarbeitet, während dieser die Datenleitung durchläuft. Die Datenleitung kann durch eine Applikation programmiert werden, um spezifische Operationen an dem Datenstrom durchzuführen, bevor die Daten entweder über die Bus-Struktur übertragen werden oder zur Applikation gesendet werden, wodurch eine Vorverarbeitung und Manipulation der Daten erfolgt, bevor die Daten an ihren Zielort gesendet werden. Die Datenleitung kann bei Auftreten eines spezifischen Ereignisses sowohl gestoppt als auch gestartet werden. Ferner kann die Datenleitung auch so programmiert werden, dass damit sowohl isochrone als auch asynchrone Daten empfangen und gesendet werden können.

In der deutschen Patentanmeldung DE 100 58 524 A1 ist ein System und ein Verfahren zur Übertragung von Daten über schaltbare Datennetze, insbesondere das Ethernet, offenbart, das einen Mischbetrieb von echtzeitkritischer und nichtechtzeitkritischer, insbesondere Inter- bzw. Intranet basierter Datenkommunikation erlaubt. Dies ermöglicht sowohl eine echtzeitkritische (RT; Real-Time) als auch eine nicht echtzeitkritische Kommunikation (NRT; Non-Real-Time) in einem schaltbaren Datennetz, bestehend aus Teilnehmergeräten und Koppeleinheiten, beispielsweise eines verteilten Automatisierungssystems, durch einen zyklischen Betrieb.

In einem so genannten Übertragungszyklus existiert für alle Teilnehmergeräte und Koppeleinheiten des schaltbaren Datennetzes jeweils wenigstens ein Bereich zur Übermittlung echtzeitkritischer und wenigstens ein Bereich zur Übermittlung nicht echtzeitkritischer Daten, wodurch die echtzeitkritische von der nicht echtzeitkritischen Kommunikation getrennt wird. Da alle Teilnehmergeräte und Koppeleinheiten immer auf eine gemeinsame Zeitbasis synchronisiert sind, finden die jeweiligen Bereiche zur Übermittlung von Daten für alle Teilnehmergeräte und Koppeleinheiten jeweils zum selben Zeitpunkt statt, d.h. die echtzeitkritische Kommunikation findet zeitlich unabhängig von der nicht echtzeitkritischen Kommunikation statt und wird deshalb nicht von dieser beeinflusst. Die echtzeitkritische Kommunikation wird im Voraus geplant. Einspeisen der Datentelegramme beim originären Sender sowie deren Weiterleitung mittels der beteiligten Koppeleinheiten erfolgt zeitbasiert. Durch Zwischenspeicherung in den jeweiligen Koppeleinheiten wird erreicht, dass zu beliebiger Zeit auftretende, spontane, internetfähige, nicht echtzeitkritische Kommunikation in den für die nicht echtzeitkritische Kommunikation vorgesehenen Übertragungsbereich eines Übertragungszyklus verschoben und auch nur dort übertragen wird.

In der genannten Anmeldung ist die Ausprägung eines prinzipiellen Aufbaus eines Übertragungszyklus der in zwei Bereiche aufgeteilt ist, beispielhaft dargestellt. Ein Übertragungszyklus ist in einen ersten Bereich, der zur Übertragung echtzeitkritischer Daten vorgesehen ist, und einen zweiten Bereich, der zur Übertragung nicht echtzeitkritischer Daten vorgesehen ist, aufgeteilt. Die Länge des dargestellten Übertragungszyklus symbolisiert dessen zeitliche Dauer, die vorteilhafterweise je nach Anwendungszweck beispielsweise zwischen einigen Mikrosekunden und einigen Sekunden beträgt.

Die Zeitdauer eines Übertragungszyklus ist veränderbar, wird aber vor dem Zeitpunkt der Datenübertragung, beispielsweise durch einen Steuerungsrechner wenigstens einmal festgelegt und ist für alle Teilnehmergeräte und Koppeleinheiten des schaltbaren Datennetzes jeweils gleich lang. Die Zeitdauer eines Übertragungszyklus und/oder die Zeitdauer des ersten Bereichs, der zur Übertragung von echtzeitkritischen Daten vorgesehen ist, kann jederzeit, beispielsweise zu vorher geplanten, festen Zeitpunkten und/oder nach einer geplanten Anzahl von Übertragungszyklen, vorteilhafterweise vor Beginn eines Übertragungszyklus verändert werden, indem der Steuerungsrechner beispielsweise auf andere geplante, echtzeitkritische Übertragungszyklen umschaltet.

Darüber hinaus kann der Steuerungsrechner jederzeit im laufenden Betrieb eines Automatisierungssystems je nach Erfordernis Neuplanungen der Echtzeitkommunikation durchführen, wodurch ebenfalls die Zeitdauer eines Übertragungszyklus verändert werden kann. Die absolute Zeitdauer eines Übertragungszyklus ist ein Maß für den zeitlichen Anteil, bzw. die Bandbreite der nicht echtzeitkritischen Kommunikation während eines Übertragungszyklus, also die Zeit, die für die nicht echtzeitkritische Kommunikation zur Verfügung steht. So hat die nicht echtzeitkritische Kommunikation beispielsweise bei einer Zeitdauer der echtzeitkritischen Kommunikation von 350µs und einem Übertragungszyklus von 500µs eine Bandbreite von 30%, bei 10ms eine Bandbreite von 97%.

Im ersten Bereich, der zur Übertragung echtzeitkritischer Daten vorgesehen ist, ist vor dem Senden der eigentlichen echtzeitkritischen Datentelegramme eine gewisse Zeitdauer zum Senden von Datentelegrammen zur Organisation der Datenübertragung reserviert. Die Datentelegramme zur Organisation der Datenübertragung enthalten beispielsweise Daten zur Zeitsynchronisation der Teilnehmergeräte und Koppeleinheiten des Datennetzes und/oder Daten zur Topologieerkennung des Netzwerks.

Nachdem diese Datentelegramme gesendet wurden, werden die echtzeitkritischen Datentelegramme gesendet. Da die Echtzeitkommunikation durch den zyklischen Betrieb im Voraus planbar ist, sind für alle zu übertragenden, echtzeitkritischen Datentelegramme eines die Sendezeitpunkte bzw. die Zeitpunkte für die Weiterleitung der echtzeitkritischen Datentelegramme vor Beginn der Datenübertragung bekannt, d.h. die Zeitdauer des Bereichs zur Übertragung von nicht echtzeitkritischen Daten ist automatisch durch die Zeitdauer des Bereichs zur Übertragung von echtzeitkritischen Daten festgelegt.

Vorteil dieser Anordnung ist, dass jeweils nur die notwendige Übertragungszeit für den echtzeitkritischen Datenverkehr verwendet wird und nach dessen Beendigung die restliche Zeit automatisch für die nicht echtzeitkritische Kommunikation, beispielsweise für die nicht planbare Internetkommunikation bzw. andere nicht echtzeitkritische Anwendungen zur Verfügung steht. Besonders vorteilhaft ist, dass die Zeitdauer des Bereichs zur Übertragung von echtzeitkritischen Daten jeweils durch die verbindungsspezifisch zu übertragenden Daten bestimmt wird, d.h., die Zeitdauer der beiden Bereiche wird für jede einzelne Datenverbindung durch die jeweils notwendige Datenmenge der zu übertragenden echtzeitkritischen Daten bestimmt, wodurch die zeitliche Aufteilung der beiden Bereiche für jede einzelne Datenverbindung für jeden Übertragungszyklus verschieden sein kann.

Es wird jeweils nur die notwendige Übertragungszeit für den echtzeitkritischen Datenverkehr verwendet und die restliche Zeit eines Übertragungszyklus steht automatisch für die nicht echtzeitkritische Kommunikation, beispielsweise für die nicht planbare Internetkommunikation bzw. andere nicht echtzeitkritische Anwendungen für alle Teilnehmergeräte des schaltbaren Datennetzes zur Verfügung.

Da die Echtzeitkommunikation im Voraus entsprechend so geplant ist, dass das Ankommen der echtzeitkritischen Datentelegramme in den entsprechenden Koppeleinheiten so geplant ist, dass die betrachteten, echtzeitkritischen Datentelegramme spätestens zum Weiterleitungszeitpunkt oder früher bei den entsprechenden Koppeleinheiten ankommen, können die echtzeitkritischen Datentelegramme ohne zeitlichen Zwischenraum gesendet bzw. weitergeleitet werden, so dass durch das dicht gepackte Senden, bzw. Weiterleiten, die zur Verfügung stehende Zeitdauer bestmöglich genutzt wird. Selbstverständlich ist es aber auch möglich, bei Bedarf Sendepausen zwischen der Übertragung der einzelnen Datentelegramme einzubauen.

Die prinzipielle Arbeitsweise in einem geschalteten Netzwerk wird stellvertretend für ein beliebiges Netzwerk beispielhaft anhand von zwei Teilnehmergeräten, beispielsweise einem Antrieb und einem Steuerrechner, mit jeweils integrierten Koppeleinheiten und einem weiteren Teilnehmergerät ohne Koppeleinheit, die durch Datenverbindungen miteinander verbunden sind, folgendermaßen erläutert.

Die Koppeleinheiten besitzen jeweils lokale Speicher, die über interne Schnittstellen mit den Teilnehmergeräten verbunden sind. Über die Schnittstellen tauschen die Teilnehmergeräte Daten mit den entsprechenden Koppeleinheiten aus. Die lokalen Speicher sind innerhalb der Koppeleinheiten über die Datenverbindungen mit den Steuerwerken verbunden. Die Steuerwerke empfangen Daten bzw. leiten Daten weiter über die internen Datenverbindungen von bzw. zu den lokalen Speichern oder über eine oder mehrere der externen Ports. Durch Anwendung des Verfahrens der Zeitsynchronisation haben die Koppeleinheiten stets eine gemeinsame synchrone Zeitbasis. Hat ein Teilnehmergerät echtzeitkritische Daten, so werden diese zum vorausgeplanten Zeitpunkt während des Bereichs für die echtzeitkritische Kommunikation über die entsprechende Schnittstelle und den lokalen Speicher vom entsprechenden Steuerwerk abgeholt und von dort über den vorgesehenen externen Port zur nächsten verbundenen Koppeleinheit gesendet.

Sendet ein anderes Teilnehmergerät zur gleichen Zeit, also während der echtzeitkritischen Kommunikation, nicht echtzeitkritische Daten, beispielsweise für eine Internetabfrage so werden diese vom Steuerwerk über den externen Port empfangen und über eine interne Verbindung an den lokalen Speicher weitergeleitet und dort zwischengespeichert. Von dort werden sie erst im Bereich für die nicht echtzeitkritische Kommunikation wieder abgeholt und an den Empfänger weitergeleitet, d.h. sie werden in den zweiten Bereich des Übertragungszyklus, der für die spontane, nicht echtzeitkritische Kommunikation vorbehalten ist, verschoben, wodurch Störungen der Echtzeitkommunikation ausgeschlossen werden.

Für den Fall, dass nicht alle zwischengespeicherten, nicht echtzeitkritischen Daten während des, für die Übertragung der nicht echtzeitkritischen Daten vorgesehenen Bereichs eines Übertragungszyklus übertragen werden können, werden sie im lokalen Speicher der entsprechenden Koppeleinheit solange zwischengespeichert, bis sie während eines, für die Übertragung der nicht echtzeitkritischen Daten vorgesehenen Bereichs eines späteren Übertragungszyklus übertragen werden können, wodurch Störungen der Echtzeitkommunikation in jedem Fall ausgeschlossen werden.

Die echtzeitkritischen Datentelegramme, die über entsprechende Datenverbindungen über die externen Ports beim Steuerwerk der zugehörigen Koppeleinheit eintreffen, werden unmittelbar über die entsprechenden externen Ports weitergeleitet. Dies ist möglich, da die Echtzeitkommunikation im Voraus geplant ist und deshalb für alle zu übertragenden, echtzeitkritischen Datentelegramme Sende- und Empfangszeitpunkt, alle jeweils beteiligten Koppeleinheiten sowie alle Zeitpunkte für die Weiterleitung und alle Empfänger der echtzeitkritischen Datentelegramme bekannt sind.

Durch die im Voraus erfolgte Planung der Echtzeitkommunikation ist auch sichergestellt, dass es auf den Datenverbindungen zu keinen Datenkollisionen kommt. Die Weiterleitungszeitpunkte aller echtzeitkritischen Datenpakete von den jeweils beteiligten Koppeleinheiten sind ebenfalls vorher geplant und damit eindeutig festgelegt. Das Ankommen der echtzeitkritischen Datentelegramme ist deshalb so geplant, dass die betrachteten, echtzeitkritischen Datentelegramme spätestens zum Weiterleitungszeitpunkt oder früher im Steuerwerk der entsprechenden Koppeleinheit ankommen. Damit ist das Problem von Zeitunschärfen, die sich insbesondere bei langen Übertragungsketten bemerkbar machen, eliminiert. Wie oben ausgeführt ist folglich ein gleichzeitiger Betrieb von echtzeitkritischer und nicht echtzeitkritischer Kommunikation im selben schaltbaren Datennetz, sowie ein beliebiger Anschluss von zusätzlichen Teilnehmergeräten an das schaltbare Datennetz möglich, ohne die Echtzeitkommunikation selbst störend zu beeinflussen.

Mit dem in der deutschen Patentanmeldung DE 100 58 524 A1 beschriebenen Verfahren ist es möglich, Ethernet-basierte Kommunikationsnetze, insbesondere isochrone Ethernet-basierte Kommunikationsnetze aufzubauen, deren Teilnehmergeräte sehr hochfrequent Datensätze austauschen und dem Anwender zur Verfügung zu stellen. Durch die Hardwareunterstützung ist dabei an der Anwenderschnittstelle ein Durchsatz möglich, der mit dem maximal möglichen Telegrammaufkommen der angeschlossen Verbindungen Schritt halten kann. Zum Beispiel bei 4 angeschlossenen 100 Mbit Vollduplexverbindungen und Frames von 64 Bytes Länge ca. 1 000 000 Telegramme/s. Im Gegensatz dazu ist der Durchsatz von Software-/Kommunikationsstack-basierten Anwenderschnittstellen für spontane Kommunikation um mindestens 2 Größenordnungen kleiner.

Diese hohen Durchsatzraten sind aber nur für isochrone zyklische Kommunikation verfügbar, bei der auch auf der Empfangsseite vorausgeplante Empfangszeitpunkte von Telegrammen exakt eingehalten werden. Dies bedeutet, dass die Telegrammübertragung ein Netz voraussetzt, dass das in der deutschen Patentanmeldung DE 100 58 524 A1 beschriebene Verfahren der zeitbasierten Durchschaltung beherrscht. Eine hochperformante Anwenderschnittstelle die auch mit existierenden Netzen mit adressbasierter Durchschaltung zusammenarbeiten kann, ist aber höchst wünschenswert.

Der Erfindung liegt daher die Aufgabe zu Grunde ein verbessertes Teilnehmergerät für ein Kommunikationssystem zu schaffen, der besonders hohe Datenraten ermöglicht. Ferner liegt der Erfindung die Aufgabe zu Grunde ein entsprechendes Kommunikationssystem und ein Kommunikationsverfahren zu schaffen.

Die der Erfindung zu Grunde liegenden Aufgaben werden durch die Merkmale der entsprechenden unabhängigen Patentansprüche jeweils gelöst. Bevorzugte Ausführungsformen der Erfindung sind in den abhängigen Patentansprüchen angegeben.

Die vorliegende Erfindung erlaubt die Realisierung eines hochperformanten Kommunikationssystems mit Telegrammraten, die zum Beispiel Anwendungen für die Real-Time Kommunikation in Automatisierungssystemen ermöglichen. Von besonderem Vorteil ist hierbei, dass hierzu auf ein Standardkommunikationssystem wie zum Beispiel das Ethernet zurückgegriffen werden kann. Für die hochperformante Kommunikation werden ein oder mehrere Teilnehmergeräte mit einer erfindungsgemäßen Schnittstelle ausgerüstet. Dabei ist es nicht erforderlich, dass alle Teilnehmergeräte des Kommunikationssystems eine solche Schnittstelle aufweisen. Dies hat den besonderen Vorteil, dass bereits existierende Teilnehmergeräte weiter benutzt werden können.

Nach einer bevorzugten Ausführungsform der Erfindung beinhaltet die Schnittstelle für die hochperformante Kommunikation zumindest eines Teilnehmers des Kommunikationssystems eine Sendeliste, die Kontrolldatensätze beinhaltet. Jeder Kontrolldatensatz enthält Steuerinformation für ein Telegramm und die Beschreibung (Adresse, Länge) der Nutzdaten. Insbesondere enthält die Steuerinformation eine Kennung (Frame-ID) des zu sendenden Telegramms. Die Adresse gibt beispielsweise den Speicherbereich der zu sendenden Nutzdaten an, die aus dem Kommunikationsspeicher des Teilnehmers abzurufen sind. Vorzugsweise wird die Sendeliste zyklisch wiederholend von dem Teilnehmergerät abgearbeitet.

Von besonderem Vorteil ist hierbei, dass basierend auf einem Kontrolldatensatz unmittelbar, das heißt "on the fly", ein Datentelegramm generiert werden kann, da ein Kontrolldatensatz alle zur Generierung eines Datentelegramms benötigten Informationen beinhaltet. Vorzugsweise sind dies neben der Kennung des Datentelegramms auch weitere Header-Informationen.

Nach einer bevorzugten Ausführungsform der Erfindung wird ein Kontrolldatensatz in eine Logik-Schaltung eingegeben, so dass die Logik-Schaltung mittels der Adresse auf die zu sendenden Nutzdaten zugreift und die Nutzdaten und die Kennung bzw. die weiteren Header-Informationen zu einem Datentelegramm verknüpft.

Von besonderem Vorteil ist dabei, dass nach Aktivierung der Sendeliste ein ganzer Satz von Datentelegrammen transferiert werden kann und zwar aufgrund der Kontrolldatensätze und der Hardware-Unterstützung durch die Logik-Schaltung mit einer sehr hohen Datenrate.

Entsprechend kann auch der Empfang von Datentelegrammen mit einer hohen Datenrate erfolgen. Auch dies ermöglichen Kontrolldatensätze, die vorzugsweise in dem zumindest einen Teilnehmergerät abgelegt sind. Ein empfangenes Datentelegramm wird aufgrund von dessen Kennung einem entsprechenden Kontrolldatensatz zugeordnet, der die Adresse für die Nutzdaten angibt. Auf dieser Adresse, zum Beispiel in dem Kommunikationsspeicher des Teilnehmers, können die Nutzdaten dann abgelegt werden.

Nach einer weiteren bevorzugten Ausführungsform der Erfindung hat die Sendeliste Steuerdatensätze, die die Reihenfolge der Verarbeitung der Kontrolldatensätze in der Sendeliste bestimmen. Vorzugsweise sind ein oder mehrere Steuerdatensätze in der Sendeliste vorhanden. Die Steuerdatensätze bewirken bedingte Sprünge in der Sendeliste, um so die Abarbeitung der Kontrolldatensätze in der Sendeliste zu bestimmen.

Nach einer bevorzugten Ausführungsform der Erfindung werden die Zyklen der Abarbeitung der Sendeliste gezählt und basierend hierauf die Bedingung für einen Sprung in der Sendeliste geprüft. Aufgrund dessen kann beispielsweise ein Sprung nur bei jedem n-ten Zyklus erfolgen, wobei n durch Maskierung von Bit-Positionen der Zyklusnummer wählbar ist.

Nach einer weiteren bevorzugten Ausführungsform der Erfindung sind die Kontrolldatensätze für den Empfang gruppenweise gespeichert. Beim Empfang eines Datentelegramms wird zunächst ein Index gebildet, der die Gruppe der Kontrolldatensätze adressiert, die für das empfangene Datentelegramm in Frage kommt. Vorzugsweise wird der Index basierend auf der Kennung des Datentelegramms gebildet.

Im weiteren werden bevorzugte Ausführungsformen der Erfindung mit Bezugnahme auf die Zeichnungen erläutert. Es zeigen:
- Figur 1: ein Blockdiagramm einer Ausführungsform eines erfindungsgemäßen Teilnehmers in einem Kommunikationssystem,
- Figur 2: eine Sendeliste des Teilnehmers,
- Figur 3: eine Logik-Schaltung des Teilnehmers zur Erzeugung von zu sendenden Datentelegrammen,
- Figur 4: ein Blockdiagramm einer Schaltung zur Prüfung einer Sprungbedingung in der Sendeliste,
- Figur 5: ein Blockdiagramm für die Zuordnung eines empfangenen Datentelegramms zu einem Kontrolldatensatz über einen Index.

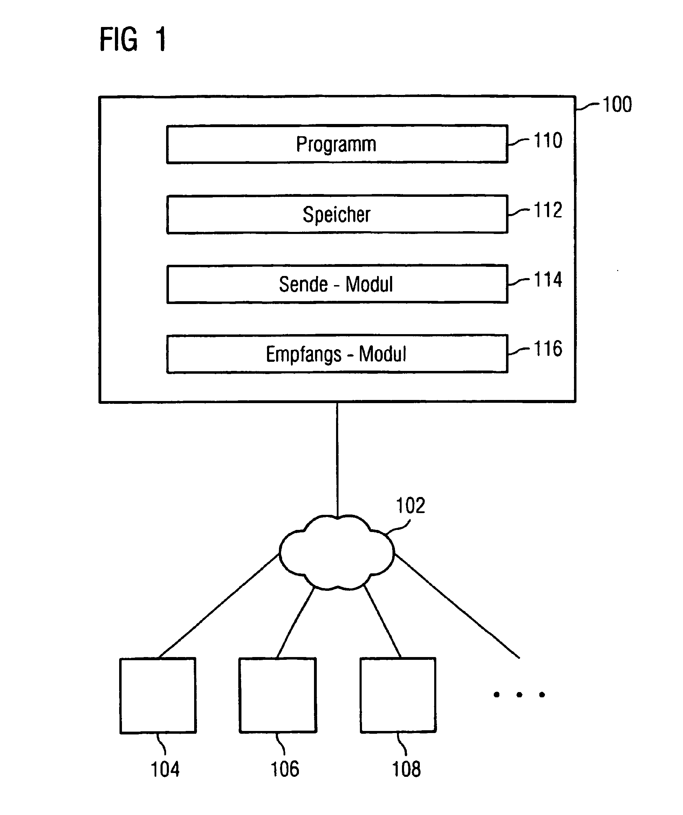

Die Figur 1 zeigt ein Teilnehmergerät 100 eines Kommunikationssystems 102, mit dem weitere Teilnehmergeräte 104, 106, 108, ... verbunden sind. Bei dem Kommunikationssystem 102 kann es sich beispielsweise um ein Standard-Ethernet handeln.

Das Teilnehmergerät 100 beinhaltet ein Anwendungsprogramm 110, das auf einen Speicher 112 des Teilnehmers 100 zugreifen kann. Bei dem Speicher 112 kann es sich um einen so genannten Kommunikationsspeicher handeln.

Ferner beinhaltet das Teilnehmergerät 100 ein Sende-Modul 114 und ein Empfangs-Modul 116. Das Sende-Modul 114 und das Empfangs-Modul 116 sind so ausgebildet, dass das Senden von Datentelegrammen von dem Teilnehmergerät 100 über das Kommunikationssystem 102 und das Empfangen von Datentelegrammen mit einer Datenrate erfolgt, die sonst nur bei der geplanten Echtzeitkommunikation erreichbar ist.

Bei dem Teilnehmergerät 100 kann es sich zum Beispiel um eine Kontrolleinheit in einem Automatisierungssystem handeln. Bei den Teilnehmergeräten 104, 106, 108, ... kann es sich um weitere Kontrolleinheiten, sogenannte intelligente Antriebe, Aktoren, Sensoren oder andere Komponenten der Automatisierungstechnik handeln. Für die Echtzeitsteuerung oder Regelung eines solchen Automatisierungssystems ist eine hohe Datenrate für die Kommunikation zwischen den Teilnehmergeräten erforderlich.

Zum Beispiel kann es sich bei den Teilnehmergeräten 104, 106, 108,... um Sensoren handeln, die zum Beispiel in Zeitabständen von einer Millisekunde Datentelegramme an das Teilnehmergerät 100 versenden. Das Teilnehmergerät 100 muss also in der Lage sein, die entsprechenden Datentelegramme zu empfangen und die Nutzdaten in dem Speicher 112 abzulegen. Entsprechend muss das Teilnehmergerät 100 die Teilnehmergeräte 104, 106, 108, ... auch mit der entsprechenden Bandbreite adressieren können, insbesondere dann, wenn es sich bei den Teilnehmergeräten 104, 106, 108,... um eine Gleichlaufsteuerung mit verschiedenen Slave-Antrieben handelt.

Von besonderem Vorteil ist, dass auch Teilnehmer, die nur mit einer Standard-Ethernet Schnittstelle ausgerüstet sind, an das Kommunikationssystem 102 angeschaltet werden können. Ein weiterer Vorteil ist, dass die Teilnahme an dem Kommunikationssystem 102 keine zeitliche Synchronisierung der Teilnehmergeräte bzw. Switches mit einem, vom Verkehrsaufkommen unabhängigen Durchschaltverhalten voraussetzt. Es kann also ein erfindungsgemäßes Teilnehmergerät 100 beispielsweise an ein vorhandenes Standard-Ethernet angeschlossen werden, um eine Vergrößerung des Datendurchsatzes zu erreichen.

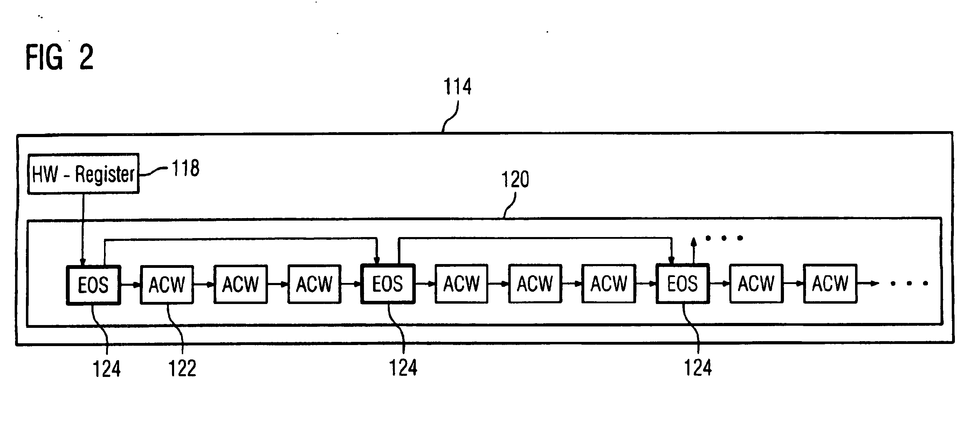

Die Figur 2 zeigt eine Ausführungsform des Sende-Moduls 114 der Figur 1. Das Sende-Modul 114 hat ein Hardware-Register 118 zur Abspeicherung einer Einsprungadresse auf den Beginn einer Sendeliste 120. Die Sendeliste 120 ist aus Kontrolldatensätzen 122 aufgebaut; diese werden auch als Application Frame Control Word (ACW) bezeichnet. Ein Kontrolldatensatz 122 beinhaltet zumindest eine Adresse und eine Kennung. Durch die Kennung wird der Kontrolldatensatz 122 einem Datentelegramm zugeordnet, welches dieselbe Kennung hat. Die Adresse in dem Kontrolldatensatz 122 gibt die Speicheradresse für die Nutzdaten des Datentelegramms an. Zusätzlich kann der Kontrolldatensatz 122 weitere Header-Informationen für das Datentelegramm beinhalten.

Durch die Aneinanderreihung von Kontrolldatensätzen 122 wird also eine Sendeliste 120 gebildet, da jeder Kontrolldatensatz 122 der Sendeliste 120 ein zu sendendes Datentelegramm eindeutig spezifiziert. Die Sendeliste 120 wird von dem Teilnehmergerät 100 (vgl. Figur 1) beginnend mit dem ersten Kontrolldatensatz 122 der Liste sequentiell abgearbeitet. Nach vollständiger Abarbeitung der Sendeliste 120 wird wieder an den Anfang der Sendeliste 120 zurückgekehrt, um die Sendeliste 120 erneut abzuarbeiten. Dieser Vorgang wird zyklisch wiederholt.

Neben den Kontrolldatensätzen 122 befinden sich in der Sendeliste 120 vorzugsweise Steuerdatensätze 124, die auch als End of Segment (EOS) bezeichnet werden. Ein Steuerdatensatz beinhaltet eine Sprungadresse zu einem anderen Steuerdatensatz 124 in der Sendeliste 120 oder zu einem Kontrolldatensatz 122 in der Sendeliste 120. Der Sprung zu der Sprungadresse wird nur ausgeführt, wenn eine Bedingung erfüllt ist, die ebenfalls in dem Steuerdatensatz 124 spezifiziert ist. Mittels der Steuerdatensätze 124 lässt sich also die Sendeliste 120 so programmieren, dass verschiedene Kontrolldatensätze 122 unterschiedlich häufig verarbeitet werden, so dass Datentelegramme mit verschiedenen Kennungen und verschiedenen Wiederholungsfrequenzen erzeugt werden können. Dies ist von besonderem Vorteil, wenn nicht alle Teilnehmergeräte an dem Kommunikationssystem 102 (vgl. Figur 1) dieselbe hohe Datenrate benötigen bzw. verarbeiten können.

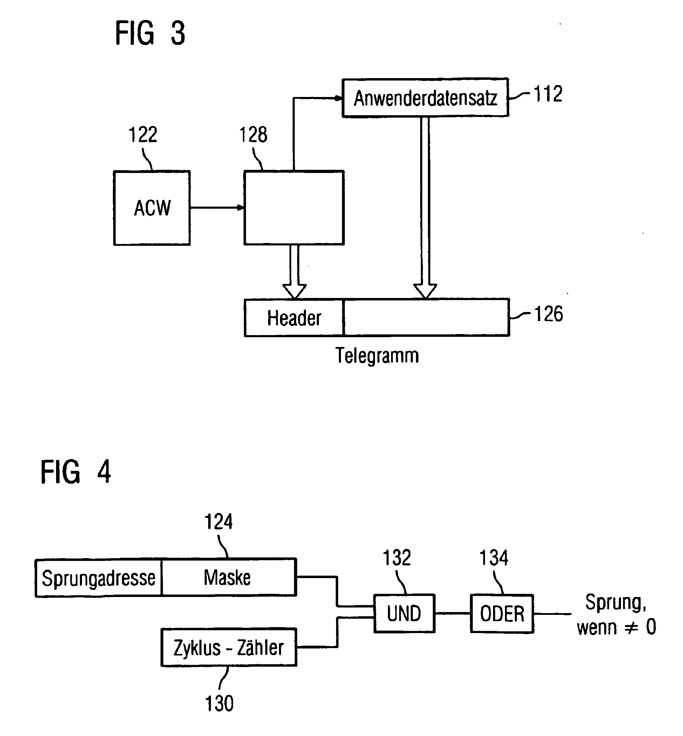

Die Figur 3 veranschaulicht die Erzeugung eines zu sendenden Datentelegramms 126 durch eine Logik-Schaltung 128 des Sende-Moduls 114. In die Logik-Schaltung 128 wird der aktuell zu verarbeitende Kontrolldatensatz 122 der Sendeliste 120 (vgl. Figur 2) eingegeben. Aufgrund der in dem Kontrolldatensatz 122 beinhalteten Adresse greift die Logik-Schaltung 128 auf den Speicher 112 des Teilnehmers 100 (vgl. Figur 1) zu, um die entsprechenden Nutzdaten aus dem Speicher 112 auszulesen.

Diese Nutzdaten werden zusammen mit der in dem Kontrolldatensatz 122 beinhalteten Kennung sowie gegebenenfalls weiteren Header-Informationen zu dem Datentelegramm 126 zusammengefügt, welches sodann von dem Teilnehmergerät 100 versendet werden kann. Von besonderem Vorteil ist hierbei, dass die Kennung und gegebenenfalls die weiteren Header-Informationen "on the fly" durch die Logik-Schaltung 128 zu den zu sendenden Nutzdaten hinzugefügt werden, so dass insbesondere zeitaufwendige Kopieraktionen vermieden werden können.

Die Figur 4 zeigt ein Ausführungsbeispiel für einen Steuerdatensatz 124 (vgl. Figur 2) und dessen Verarbeitung. Der Steuerdatensatz 124 beinhaltet eine Sprungadresse und eine Maske. Das Sende-Modul 114 (vgl. Figur 1) beinhaltet zur Auswertung des Steuerdatensatzes 124 einen Zyklus-Zähler 130.

Der Zyklus-Zähler 130 wird nach jeder vollständigen Abarbeitung der Sendeliste 120 (vgl. Figur 2) inkrementiert. Beispielsweise hat der Zyklus-Zähler eine Breite von acht Bit. Die Maske in dem Steuerdatensatz 124 gibt an, welche der Bit-Positionen des Zyklus-Zählers 130 für die Prüfung der Bedingung verwendet werden.

Beispielsweise lautet die Maske "00000111", das heißt nur die drei niederwertigsten Bits des Zyklus-Zählers 130 werden für die Auswertung verwendet. Die einzelnen Bits der Maske und des aktuellen Stands des Zyklus-Zählers 130 werden bitweise in dem Gatter 132 einer logischen UND Operation unterzogen. Die einzelnen Ausgänge des Gatters 132 werden dann in dem Gatter 134 einer ODER Operation unterzogen. Der Ausgang des Gatters 134 ist also logisch "1", wenn auch nur ein Bit der drei niederwertigsten Bits des aktuellen Zyklus des Zyklus-Zählers 130 logisch "1" ist. Den Wert logisch "0" erreicht der Ausgang des Gatters 134 nur dann, wenn die drei niederwertigsten Bits des Zyklus auf "000" stehen. Dies ist nur bei jedem achten Zyklus der Fall.

Ein Sprung zu der Sprungadresse, die in dem Steuerdatensatz 124 angegeben ist, erfolgt nur dann, wenn der Ausgang des Gatters 134 logisch "1" ist, das heißt in allen Fällen, außer bei einem Stand von "000" auf den drei niederwertigsten Bits des Zyklus-Zählers 130. Die auf diese Art und Weise übersprungenen Kontrolldatensätze 122 werden also nur in jedem achten Zyklus verarbeitet, so dass die entsprechenden Datensätze mit einer entsprechend verminderten Häufigkeit versendet werden. Nur diejenigen Kontrolldatensätze 122 in der Sendeliste 120, die nicht übersprungen werden, werden mit der vollen Wiederholhäufigkeit des Zyklus verarbeitet.

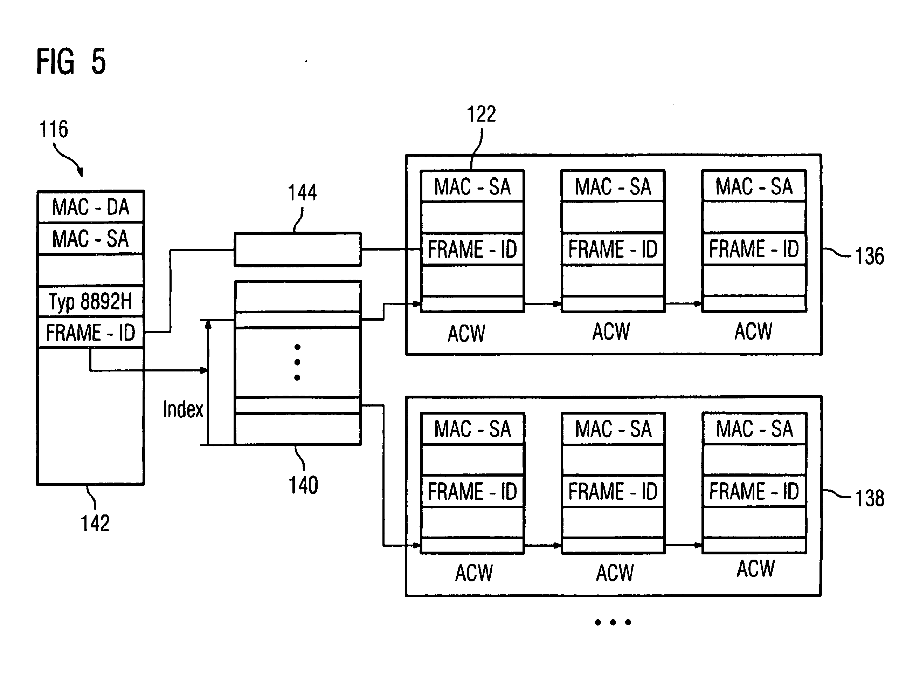

Die Figur 5 zeigt eine Ausführungsform des Empfangs-Moduls 116 der Figur 1. Das Empfangs-Modul 116 hat einen Index 140 sowie Gruppen 136, 138, ... von Kontrolldatensätzen 122. Die Kontrolldatensätze sind prinzipiell gleich aufgebaut, wie die Kontrolldatensätze der Sendeliste 120 (vgl. Figur 2). Jeder der Kontrolldatensätze 122 hat eine Kennung für das dem betreffenden Kontrolldatensatz 122 zuzuordnende Datentelegramm. Diese Kennung wird auch als "FRAME-ID" bezeichnet. Diese Kennung kann global eindeutig sein. Alternativ muss zusätzlich zu der Kennung noch die Zieladresse ausgewertet werden, die als MAC-SA bezeichnet wird.

Die Gruppierung der Kontrolldatensätze 122 erfolgt basierend auf den Kennungen. Wenn die Kennungen beispielsweise eine Länge von acht Bit aufweisen, so werden beispielsweise die niederwertigsten drei Bit der Kennung zur Bildung der Gruppen 136, 138, ... herangezogen, indem 2³ solcher Gruppen entsprechend den 2³ kombinatorischen Möglichkeiten für die Belegung der drei niederwertigsten Bits gebildet werden.

Beispielsweise beinhaltet die Gruppe 136 diejenigen Kontrolldatensätze 122, die Kennungen beinhalten, die mit "000" enden. Die Gruppe 138 beinhaltet diejenigen Kontrolldatensätze 122, die Kennungen beinhalten, die mit "001" enden, usw. In dem hier betrachteten Anwendungsfall werden also acht solcher Gruppen von Kontrolldatensätzen 122 gebildet.

Die Einsprungadressen in die Gruppen 136, 138, ... sind in dem Index 140 gespeichert.

Wenn ein Datentelegramm 142 von dem Teilnehmergerät 100 (vgl. Figur 1) empfangen wird, so wird in dem Empfangs-Modul 116 auf den Index 140 zugegriffen, und zwar mit den drei niederwertigsten Bit-Positionen der Kennung des Datentelegramms 142 als Schlüssel. Lauten die drei niederwertigsten Bits der Kennung in dem Datentelegramm 142 beispielsweise "000" so verweist der Index 140 auf die Gruppe 136.

Diese Gruppe 136 wird dann auf Kontrolldatensätze 122 hin durchsucht, die dieselbe Kennung aufweisen, wie die Kennung des Datentelegramms 142. Dies kann mit Hilfe eines Komparators 144 erfolgen. Wenn es sich bei der Kennung nicht um eine global eindeutige Kennung handelt, muss zusätzlich die Übereinstimmung der MAC-SA überprüft werden.

Von besonderem Vorteil ist hierbei, dass aufgrund der Gruppierung der Kontrolldatensätze 122 nicht sämtliche der in dem Empfangs-Modul 116 vorhandenen Kontrolldatensätze 122 auf eine übereinstimmende Kennung hin überprüft werden müssen, sondern nur die Kontrolldatensätze, die in der Gruppe beinhaltet sind, auf die der Index 140 für eine bestimmte Belegung der niederwertigsten Bit-Positionen der Kennung in dem Datentelegramm 142 verweist. Auf diese Art und Weise kann die Suche nach dem, dem Datentelegramm 142 zugeordneten Kontrolldatensatz 122 besonders schnell erfolgen.

Nachdem der dem Datentelegramm 142 zugeordnete Kontrolldatensatz 122 auf diese Art und Weise ermittelt worden ist, werden die in dem Datentelegramm 142 beinhalteten Nutzdaten auf der Speicheradresse, die in dem Kontrolldatensatz 122 angegeben ist, abgelegt.

## Patentansprüche

1. Teilnehmergerät für ein Kommunikationssystem (102) zum Senden und Empfangen von Datentelegrammen, wobei ein Datentelegramm Nutzdaten und eine Kennung aufweist, wobei die Steuerung des Sendens und Empfangens von Datentelegrammen auf Kontrolldatensätzen (122) basiert, und ein Kontrolldatensatz eine Adresse für die Nutzdaten und die Kennung des Datentelegramms aufweist, welches dem Kontrolldatensatz zugeordnet ist, mit
- einer Sendeliste (120), die eine erste Anzahl von Kontrolldatensätzen beinhaltet,
- Schaltungsmitteln (128) zur Erzeugung eines zu sendenden Datentelegramms aufgrund eines Kontrolldatensatzes der Sendeliste, wobei die Sendeliste ein oder mehrere Steuerdatensätze (124) aufweist, die bedingte Sprünge bewirken und die Reihenfolge der Verarbeitung der ersten Anzahl von Kontrolldatensätzen bestimmen;
- eine zweite Anzahl (136, 138) von Kontrolldatensätzen,
- Mitteln (140, 144) zur Zuordnung eines empfangenen Datentelegramms zu einem der Kontrolldatensätze der zweiten Anzahl von Kontrolldatensätzen, wobei die Zuordnung aufgrund der Kennung des empfangenen Datentelegramms erfolgt.

2. Teilnehmergerät nach Anspruch 1, wobei es sich bei dem Kommunikationssystem um ein Kommunikationssystem von einem Ethernet Typ oder Real-time Ethernet Typ handelt.

3. Teilnehmergerät nach Anspruch 1 oder 2, wobei die Sendeliste zur Verarbeitung innerhalb eines Zyklus vorgesehen ist.

4. Teilnehmergerät nach Anspruch 1, wobei der Steuerdatensatz eine bedingte Sprungadresse auf einen Kontrolldatensatz der ersten Anzahl von Kontrolldatensätzen beinhaltet.

5. Teilnehmergerät nach Anspruch 4 mit einem Zyklus-Zähler (130) und wobei der Steuerdatensatz so ausgebildet ist, dass der Sprung zu der Sprungadresse bei jedem n-ten Zyklus erfolgt.

6. Teilnehmergerät nach Anspruch 5, wobei der Steuerdatensatz so ausgebildet ist, dass der n-te Zyklus durch Maskierung von Bit-Positionen der Zyklusnummer wählbar ist.

7. Teilnehmergerät nach einem der vorhergehenden Ansprüche 1 bis 6, wobei die Kontrolldatensätze der zweiten Anzahl von Kontrolldatensätzen gruppenweise gespeichert sind, und das so ausgebildet ist, daß Zugriff auf einen Kontrolldatensatz über einen Index (140) erfolgt, wobei die Gruppe des Kontrolldatensatzes basierend auf der Kennung des empfangenen Datentelegramms bestimmt wird.

8. Kommunikationssystem mit mehreren Teilnehmergeräten(100, 104, 106, 108) zum Senden und Empfangen von Datentelegrammen, wobei ein Datentelegramm Nutzdaten und eine Kennung aufweist, wobei die Steuerung des Sendens und Empfangens von Datentelegrammen durch zumindest eines der Teilnehmergeräte auf Kontrolldatensätzen basiert, und ein Kontrolldatensatz eine Adresse für die Nutzdaten und die Kennung des Datentelegramms aufweist, welches dem Kontrolldatensatz zugeordnet ist, und wobei das zumindest eine Teilnehmergerät beinhaltet:
- eine Sendeliste (120), die eine erste Anzahl von Kontrolldatensätzen beinhaltet,
- Schaltungsmittel (128) zur Erzeugung eines zu sendenden Datentelegramms aufgrund eines Kontrolldatensatzes der Sendeliste, wobei die Sendeliste ein oder mehrere Steuerdatensätze (124) aufweist, die bedingte Sprünge bewirken und die Reihenfolge der Verarbeitung der ersten Anzahl von Kontrolldatensätzen bestimmen;
- eine zweite Anzahl (136, 138) von Kontrolldatensätzen,
- Mittel (140, 144) zur Zuordnung eines empfangenen Datentelegramms zu einem der Kontrolldatensätze der zweiten Anzahl von Kontrolldatensätzen, wobei die Zuordnung aufgrund der Kennung des empfangenen Datentelegramms erfolgt.

9. Kommunikationssystem nach Anspruch 8, wobei es sich bei dem Kommunikationssystem um ein Kommunikationssystem von einem Ethernet Typ oder Realtime Ethernet Typ handelt.

10. Kommunikationssystem nach Anspruch 8 oder 9, wobei die Sendeliste zur Verarbeitung innerhalb eines Zyklus vorgesehen ist.

11. Kommunikationssystem nach Anspruch 8, 9 oder 10, wobei der Steuerdatensatz eine bedingte Sprungadresse auf einen Kontrolldatensatz der ersten Anzahl von Kontrolldatensätzen beinhaltet.

12. Kommunikationssystem nach Anspruch 11 mit einem Zyklus-Zähler (130) und wobei der Steuerdatensatz so ausgebildet ist, dass der Sprung zu der Sprungadresse bei jedem n-ten Zyklus erfolgt.

13. Kommunikationssystem nach Anspruch 12, wobei der Steuerdatensatz so ausgebildet ist, dass der n-te Zyklus durch Maskierung von Bit-Positionen der Zyklusnummer wählbar ist.

14. Kommunikationssystem nach einem der vorhergehenden Ansprüche 8 bis 13, wobei die Kontrolldatensätze der zweiten Anzahl von Kontrolldatensätzen gruppenweise gespeichert sind, und das so ausgebildet ist, daß Zugriff auf einen Kontrolldatensatz über einen Index (140) erfolgt, wobei die Gruppe des Kontrolldatensatzes basierend auf der Kennung des empfangenen Datentelegramms bestimmt wird.

15. Verfahren zum Senden und Empfangen von Datentelegrammen durch ein Teilnehmergerät (100, 104, 106, 108) eines Kommunikationssystems (102), wobei ein Datentelegramm Nutzdaten und eine Kennung aufweist, wobei die Steuerung des Sendens und Empfangens von Datentelegrammen durch das Teilnehmergerät auf Kontrolldatensätzen (122) basiert, und ein Kontrolldatensatz eine Adresse für die Nutzdaten und die Kennung des Datentelegramms aufweist, welches dem Kontrolldatensatz zugeordnet ist, mit folgenden Schritten:
- Erzeugung eines zu sendenden Datentelegramms aufgrund eines Kontrolldatensatzes einer ersten Anzahl von Kontrolldatensätzen einer Sendeliste (120), wobei durch einen oder mehrere Steuerdatensätze (124) der Sendeliste bedingte Sprünge bewirkt werden und die Reihenfolge der Verarbeitung der Kontrolldatensätze der ersten Anzahl von Kontrolldatensätzen bestimmt wird;
- Zuordnung eines empfangenen Datentelegramms zu einem Kontrolldatensatz einer zweiten Anzahl (136, 138) von Kontrolldatensätzen basierend auf der Kennung.

16. Verfahren nach Anspruch 15, wobei die Sendeliste innerhalb eines Zyklus verarbeitet wird.

17. Verfahren nach Anspruch 15 oder 16, wobei ein bedingter Sprung zu einem Kontrolldatensatz der ersten Anzahl von Kontrolldatensätzen erfolgt, wenn eine Bedingung des Steuerdatensatzes erfüllt ist.

18. Verfahren nach Anspruch 17, wobei die Erfüllung der Bedingung basierend auf einem Zyklus-Zähler geprüft wird.

19. Verfahren nach einem der vorhergehenden Ansprüche 15 bis 18, wobei für den Zugriff auf einen Kontrolldatensatz der zweiten Anzahl von Kontrolldatensätzen zunächst auf einen Index (140) zugegriffen wird, um die Gruppe, zu der der Kontrolldatensatz gehört, zu ermitteln, wobei der Index basierend auf den Kennungen der Datentelegramme gebildet wird.

## Claims

1. Station device for a communication system (102) for transmitting and receiving data telegrams, where a data telegram has user data and an identifier, where the control of transmission and reception of data telegrams is based on pilot data records (122), and a pilot data record has an address for the user data and the identifier of the data telegram which is associated with the pilot data record, having
- a transmission list (120) which contains a first number of pilot data records,
- circuit means (128) for producing a data telegram (which is to be transmitted) on the basis of a pilot data record in the transmission list, where the transmission list has one or more control data records (124) which prompt conditional jumps and determine the order of processing of the first number of pilot data records,
- a second number (136, 138) of pilot data records,
- means (140, 144) for associating a received data telegram with one of the pilot data records from the second number of pilot data records, the association being made on the basis of the identifier of the received data telegram.

2. Station device according to Claim 1, where communication system is a communication system of an Ethernet type or real-time Ethernet type.

3. Station device according to Claim 1 or 2, where the transmission list is provided for the purpose of processing within a cycle.

4. Station device according to Claim 1, where the control data record contains a conditional jump address for a pilot data record from the first number of pilot data records.

5. Station device according to Claim 4, with a cycle counter (130) and where the control data record is in a form such that the jump to the jump address is made in every nth cycle.

6. Station device according to Claim 5, where the control data record is in a form such that the nth cycle can be chosen by masking bit positions of the cycle number.

7. Station device according to one of the preceding Claims 1 to 6, where the pilot data records from the second number of pilot data records are stored in groups, and which is designed such that access to a pilot data record is effected using an index (140), the pilot data record's group being determined on the basis of the received data telegram's identifier.

8. Communication system having a plurality of station devices (100, 104, 106, 108) for transmitting and receiving data telegrams, where a data telegram has user data and an identifier, where the control of the transmission and reception of data telegrams by at least one of the station devices is based on pilot data records, and a pilot data record has an address for the user data and the identifier of the data telegram which is associated with the pilot data record, and where the at least one station device contains:
- a transmission list (120) which contains a first number of pilot data records,
- circuit means (128) for producing a data telegram (which is to be transmitted) on the basis of a pilot data record in the transmission list, where the transmission list has one or more control data records (124) which prompt conditional jumps and determine the order of processing of the first number of pilot data records,
- a second number (136, 138) of pilot data records,
- means (140, 144) for associating a received data telegram with one of the pilot data records from the second number of pilot data records, the association being made on the basis of the identifier of the received data telegram.

9. Communication system according to Claim 8, where communication system is a communication system of an Ethernet type or real-time Ethernet type.

10. Communication system according to Claim 8 or 9, where the transmission list is provided for the purpose of processing within a cycle.

11. Communication system according to Claim 8, 9 or 10, where the control data record contains a conditional jump address for a pilot data record from the first number of pilot data records.

12. Communication system according to Claim 11, with a cycle counter (130) and where the control data record is in a form such that the jump to the jump address is made in every nth cycle.

13. Communication system according to Claim 12, where the control data record is in a form such that the nth cycle can be chosen by masking bit positions of the cycle number.

14. Communication system according to one of the preceding Claims 8 to 13, where the pilot data records from the second number of pilot data records are stored in groups, and which is designed such that access to a pilot data record is effected using an index (140), the pilot data record's group being determined on the basis of the received data telegram's identifier.

15. Method for the transmission and reception of data telegrams by a station device (100, 104, 106, 108) in a communication system (102), where a data telegram has user data and an identifier, where the control of the transmission and reception of data telegrams by station device is based on pilot data records (122), and a pilot data record has an address for the user data and the identifier of the data telegram which is associated with the pilot data record, having the following steps:
- a data telegram to be transmitted is produced on the basis of a pilot data record from a first number of pilot data records on a transmission list (120), where conditional jumps are prompted by one or more control data records (124) in the transmission list and the order of processing of the pilot data records from the first number of pilot data records is determined;
- a received data telegram is associated with a pilot data record from a second number (136, 138) of pilot data records on the basis of the identifier.

16. Method according to Claim 15, where the transmission list is processed within a cycle.

17. Method according to Claims 15 or 16, where a conditional jump to a pilot data record from the first number of pilot data records is made when a condition for the control data record has been satisfied.

18. Method according to Claim 17, where satisfaction of the condition is checked on the basis of a cycle counter.

19. Method according to one of the preceding Claims 15 to 18, where a pilot data record from the second number of pilot data records is accessed by first accessing an index (140) in order to ascertain the group with which the pilot data record is associated, the index being formed on the basis of the identifiers of the data telegrams.

## Revendications

1. Appareil d'abonné pour un système de communication (102) en vue de l'émission et de la réception de télégrammes de données, un télégramme de données comportant des données utiles et un identificateur, la commande de l'émission et de la réception de télégrammes de données étant basée sur des ensembles de données de contrôle (122) et un ensemble de données de contrôle comportant une adresse pour les données utiles et l'identificateur du télégramme de données qui est associé à l'ensemble de données de contrôle, avec :
- une liste d'émission (120), qui contient une première quantité d'ensembles de données de contrôle ;
- des moyens de commutation (128) pour la production d'un télégramme de données à émettre sur la base d'un ensemble de données de contrôle de la liste d'émission, la liste d'émission comportant un ou plusieurs ensembles de données de commande (124) qui déclenchent des sauts conditionnels et déterminent l'ordre de traitement de la première quantité d'ensembles de données de contrôle ;
- une deuxième quantité (136, 138) d'ensembles de données de contrôle ;
- des moyens (140, 144) pour l'association d'un télégramme de données reçu à l'un des ensembles de données de contrôle de la deuxième quantité d'ensembles de données de contrôle, l'association s'effectuant sur la base de l'identificateur du télégramme de données reçu.

2. Appareil d'abonné selon la revendication 1, le système de communication étant un système de communication du type Ethernet ou du type Ethernet à temps réel.

3. Appareil d'abonné selon la revendication 1 ou 2, la liste d'émission étant prévue pour un traitement à l'intérieur d'un cycle.

4. Appareil d'abonné selon la revendication 1, l'ensemble de données de commande contenant une adresse de saut conditionnel à un ensemble de données de contrôle de la première quantité d'ensembles de données de contrôle.

5. Appareil d'abonné selon la revendication 4, avec un compteur de cycles (130), l'ensemble de données de commande étant conçu de telle sorte que le saut à l'adresse de saut s'effectue à chaque n-ème cycle.

6. Appareil d'abonné selon la revendication 5, l'ensemble de données de commande étant conçu de telle sorte que le n-ème cycle peut être choisi par masquage de positions de bits du numéro de cycle.

7. Appareil d'abonné selon l'une des revendications précédentes 1 à 6, les ensembles de données de contrôle de la deuxième quantité d'ensembles de données de contrôle étant mémorisés par groupes et l'appareil d'abonné étant conçu de telle sorte que l'accès à un ensemble de données de contrôle s'effectue par l'intermédiaire d'un index (140), le groupe de l'ensemble de données de contrôle étant déterminé en se basant sur l'identificateur du télégramme de données reçu.

8. Système de communication avec plusieurs appareils d'abonné (100, 104, 106, 108) pour l'émission et la réception de télégrammes de données, un télégramme de données comportant des données utiles et un identificateur, la commande de l'émission et de la réception de télégrammes de données par au moins l'un des appareils d'abonné étant basée sur des ensembles de données de contrôle et un ensemble de données de contrôle comportant une adresse pour les données utiles et l'identificateur du télégramme de données qui est associé à l'ensemble de données de contrôle, le ou les appareils d'abonné contenant chacun :
- une liste d'émission (120), qui contient une première quantité d'ensembles de données de contrôle ;
- des moyens de commutation (128) pour la production d'un télégramme de données à émettre sur la base d'un ensemble de données de contrôle de la liste d'émission, la liste d'émission comportant un ou plusieurs ensembles de données de commande (124) qui déclenchent des sauts conditionnels et déterminent l'ordre de traitement de la première quantité d'ensembles de données de contrôle ;
- une deuxième quantité (136, 138) d'ensembles de données de contrôle ;
- des moyens (140, 144) pour l'association d'un télégramme de données reçu à l'un des ensembles de données de contrôle de la deuxième quantité d'ensembles de données de contrôle, l'association s'effectuant sur la base de l'identificateur du télégramme de données reçu.

9. Système de communication selon la revendication 8, le système de communication étant un système de communication du type Ethernet ou du type Ethernet à temps réel.

10. Système de communication selon la revendication 8 ou 9, la liste d'émission étant prévue pour un traitement à l'intérieur d'un cycle.

11. Système de communication selon la revendication 8, 9 ou 10, l'ensemble de données de commande contenant une adresse de saut conditionnel à un ensemble de données de contrôle de la première quantité d'ensembles de données de contrôle.

12. Système de communication selon la revendication 11, avec un compteur de cycles (130), l'ensemble de données de commande étant conçu de telle sorte que le saut à l'adresse de saut s'effectue à chaque n-ème cycle.

13. Système de communication selon la revendication 12, l'ensemble de données de commande étant conçu de telle sorte que le n-ème cycle peut être choisi par masquage de positions de bits du numéro de cycle.

14. Système de communication selon l'une des revendications précédentes 8 à 13, les ensembles de données de contrôle de la deuxième quantité d'ensembles de données de contrôle étant mémorisés par groupes et le système de communication étant conçu de telle sorte que l'accès à un ensemble de données de contrôle s'effectue par l'intermédiaire d'un index (140), le groupe de l'ensemble de données de contrôle étant déterminé en se basant sur l'identificateur du télégramme de données reçu.

15. Procédé pour l'émission et la réception de télégrammes de données par un appareil d'abonné (100, 104, 106, 108) d'un système de communication (102), un télégramme de données comportant des données utiles et un identificateur, la commande de l'émission et de la réception de télégrammes de données par l'appareil d'abonné étant basée sur des ensembles de données de contrôle (122) et un ensemble de données de contrôle comportant une adresse pour les données utiles et l'identificateur du télégramme de données qui est associé à l'ensemble de données de contrôle, avec les étapes suivantes :
- production d'un télégramme de données à émettre sur la base d'un ensemble de données de contrôle d'une première quantité d'ensembles de données de contrôle d'une liste d'émission (120), un ou plusieurs ensembles de données de commande (124) de la liste d'émission déclenchant des sauts conditionnels et déterminant l'ordre de traitement des ensembles de données de contrôle de la première quantité d'ensembles de données de contrôle ;
- association d'un télégramme de données reçu à un ensemble de données de contrôle d'une deuxième quantité (136, 138) d'ensembles de données de contrôle sur la base de l'identificateur.

16. Procédé selon la revendication 15, dans lequel on traite la liste d'émission à l'intérieur d'un cycle.

17. Procédé selon la revendication 15 ou 16, dans lequel on effectue un saut conditionnel à un ensemble de données de contrôle de la première quantité d'ensembles de données de contrôle lorsqu'une condition de l'ensemble de données de commande est satisfaite.

18. Procédé selon la revendication 17, dans lequel on vérifie la satisfaction de la condition en se basant sur un compteur de cycles.

19. Procédé selon l'une des revendications précédentes 15 à 18, dans lequel, pour l'accès à un ensemble de données de contrôle de la deuxième quantité d'ensembles de données de contrôle, on accède d'abord à un index (140) pour déterminer le groupe auquel l'ensemble de données de contrôle appartient, l'index étant formé en se basant sur les identificateurs des télégrammes de données.
